Europäisches Patentamt

European Patent Office

Office européen des brevets

(19)

(11) Veröffentlichungsnummer: **0 092 594**
**A1**

## (12) EUROPÄISCHE PATENTANMELDUNG

(21) Anmeldenummer: 82103483.2

(22) Anmeldetag: 24.04.82

(51) Int. Cl.³: **C 14 B 13/00**
C 14 B 7/00, C 08 L 89/06

(43) Veröffentlichungstag der Anmeldung:
02.11.83 Patentblatt 83/44

(84) Benannte Vertragsstaaten:
DE FR GB IT

(71) Anmelder: Krecke, Edmond Dominique
72 Boulevard de la Pétrusse
Luxemburg(LU)

(72) Erfinder: Krecke, Edmond Dominique
72 Boulevard de la Pétrusse
Luxemburg(LU)

(74) Vertreter: Blumbach Weser Bergen Kramer Zwirner
Hoffmann Patentanwälte
Sonnenbergerstrasse 43
D-6200 Wiesbaden 1(DE)

(54) Verfahren zur Herstellung von Ledergrundmaterial und nach dem Verfahren hergestelltes Material.

(57) Lederabfälle werden zuerst in Streifen oder Stücke zerschnitten oder zerquetscht. Das Zerreißen der Lederstücke oder -streifen kann in schnell rotierenden Trommeln mit Messersätzen erfolgen. Schließlich werden die Einzelfasern vom Feinmaterial abgetrennt. Die so hergestellte Ledergrundmasse besitzt ähnliche Eigenschaften wie Leder. Zusätzlich kann sie aber je nach Anwendungszweck mit weiteren Eigenschaften versehen werden. Durch die Verwendung von Abfallmaterial ist die hergestellte Ledergrundmasse billig.

EP 0 092 594 A1

<u>Verfahren zur Herstellung von Ledergrundmaterial und
nach dem Verfahren hergestelltes Material</u>

Leder wird auf vielen Gebieten wegen seiner guten Eigenschaften seit alters her eingesetzt. Wegen seiner tierischen Herkunft ist es jedoch nur begrenzt verfügbar und
außerdem verhältnismäßig teuer.

Der Erfindung liegt demgemäß die Aufgabe zugrunde, ein
Verfahren zur Herstellung eines Materials anzugeben, das
in vieler Hinsicht ähnliche Eigenschaften wie Leder besitzt, zusätzlich aber je nach Anwendungszweck mit weiteren Eigenschaften versehen werden kann und durch Verwendung von Abfallmaterial billig ist, so daß ein Recycling-Verfahren entsteht.
Ein erstes Verfahren zur Herstellung von Ledergrundmasse ist gekennzeichnet durch die Verfahrensschritte:
a) Zerschneiden von Lederabfällen in Streifen oder
   Stücke;
b) Zerreißen oder Zerquetschen der Streifen oder Stücke
   bis zur Auflösung in Feinmaterial und Einzelfasern;
c) Abtrennen der Einzelfasern vom Feinmaterial.

Man erhält auf diese Weise aus in großen Mengen verfügbaren Lederabfällen ein Fasermaterial, das aus ineinander verhakten oder verfilzten Einzelfasern besteht. Die
Faserlänge sollte durch entsprechendes Zerschneiden der
Lederabfälle im Bereich zwischen etwa 2 mm und 14 mm
liegen.

Das Zerreißen der Lederstücke oder -Streifen kann in
schnell rotierenden Trommeln mit kammartig angeordneten
Messersätze erfolgen, die teilweise mit der Trommel rotieren und teilweise feststehen. Neben dem Zerreißen erzielt man durch die schnell rotierenden Messer auch Einkerbungen und Aufrauhungen der Fasern, die zu einem besseren Verhaken und Verfilzen führen.

Das Fasermaterial kann beispielsweise auf einer Baustelle gewässert und dann schichtartig auf eine Oberfläche aufgespritzt werden. Beim Trocknen ziehen sich die Fasern zusammen und verhaken miteinander, so daß eine feste Schicht entsteht. Zweckmäßig wird zur Verbesserung der Eigenschaften das Fasermaterial jedoch in Weiterbildung der Erfindung mit einem Plastifizierer und/oder einem Binder und/oder einem Harz vermischt, bevor es als Schicht auf eine Oberfläche aufgebracht wird. Als Plastifizierer kann beispielsweise Tylose mit oder ohne Binder verwendet werden. Als Binder kommen beispielsweise Zellulosegelatine, Methylzellulose o.ä. in Frage. Harz, insbesondere Kunststoffharz, wird zweckmäßig in Pulverform beigefügt.

Neben dem vorstehend beschriebenen Verfahren zur Herstellung von Ledergrundmasse, bei dem auf trockenem Wege ein Fasermaterial gewonnen wird, sieht die Erfindung ein weiteres Verfahren zur Herstellung einer Ledergrundmasse vor, das gekennzeichnet ist durch die Verfahrensschritte:

a) Zerschneiden von Lederabfällen in Streifen oder Stücke;

b) Zerreißen oder Zerquetschen der Streifen oder Stücke unter Auflockerung der Faserverbände und Erzeugung von Büscheln;

c) wenigstens teilweises Auflösen der Büschel in Einzelfasern mittels eines Lösungsmittels;

d) Abtrennen des Lösungsmittels.

Im Gegensatz zu dem anfangs beschriebenen Verfahren werden hier die Lederstreifen oder -Stücke nicht vollständig bis zur Trennung der Einzelfasern zerrissen, sondern es erfolgt nur eine Auflockerung. Die dabei entstehenden Büschel werden mit einem Lösungsmittel, beispielsweise Aceton mit Kupferoxid-Ammoniak und Kupersulfat behandelt, wobei nach dem Abtrennen des Lösungsmittels eine gelatineartige Masse verbleibt. Dabei kann die Behandlung mit dem Lösungsmittel abgebrochen werden, bevor das gesamte feste Material aufgelöst ist, so daß die Faserbüschel in der gelatineartigen Masse verbleiben und nur eine Anlösung stattfindet. Alternativ besteht jedoch die Möglichkeit, das gesamte Fasermaterial aufzulösen.

Die gelatineartige Masse kann mit einem Anteil von beispielsweise 10 % als Bindemittel für das nach dem eingangs genannten Verfahren hergestellte Fasermaterial dienen.

Nach einer Weiterbildung der Erfindung kann die nach beiden Verfahren hergestellte Ledergrundmasse mit einem Füllmittel vermischt werden. So besteht die Möglichkeit, Bims, Vermiculit, Kork o.ä. Material als Füllstoff vorzusehen, wobei dann ein Ledermaterial mit besonders guten Wärmeisolierungseigenschaften entsteht. Durch Beifügen eines Schäum- und/oder Blähmittels üblicher Art läßt sich das Wärmeisolationsvermögen bei niedrigem Gewicht noch steigern. Wenn dagegen gute Wärmeleitfähigkeit erwünscht ist, beispielsweise bei Fußbodenheizungen, so können als Füllmittel Metallstaub und/oder Metallspäne verwendet werden, beispielsweise aus Aluminium wegen der guten Oxidationsbeständigkeit. Auf diese Weise läßt sich eine Fußbodenheizung direkt auf einem Betonboden anbringen, wobei als erste Schicht ein Ledergrundmaterial mit einer Bimsfüllung zur guten Wärmeisolation verwendet wird, darauf die Heizungsrohre ausgelegt werden und anschließend eine metallgefüllte Deckschicht aufgebracht wird, die gehfest ist.

Zur Erzielung bestimmter gewünschter Eigenschaften können weitere Zusatzstoffe Verwendung finden, insbeson-

dere Thixotropiermittel oder Flammschutzausrüstungen. Des weiteren läßt sich das Ledergrundmaterial beliebig färben, und zwar durch Zusatz von Farben oder Verwendung bereits gefärbter Lederabfälle. Durch Zufügen von Weißkalk in Pulverform läßt sich das Aushärten beschleunigen und zusätzlich eine bessere Oberflächenhärte erreichen.

Die Ledergrundmasse nach der Erfindung kann zur Beschichtung von Oberflächen der unterschiedlichsten Art verwendet werden. Je nach der Art der Fläche und der verwendeten Beimischungen läßt sich die Masse aufspritzen, aufspachteln, aufgießen oder aufstreichen. Dabei können Schichten direkt auf Wänden, Fußböden oder Decken aufgetragen werden, oder es kann ein Trägermaterial, beispielsweise in Form eines Gewebes, einer Metall- oder Kunststoff-Folie, einer Papierbahn oder eines Netzes Verwendung finden. Nach dem Aufbringen des Ledergrundmaterials erhält man ein Bahnenmaterial, das sich auf vielerlei Weise einsetzen läßt, beispielsweise zur Oberflächenverbesserung oder zur Wärmedämmung. Die Oberfläche des Materials selbst kann noch nachbehandelt werden, beispielsweise durch Anbringen von Einprägungen oder Narbungen, die dem Material das Aussehen echten Leders verleihen. Die erfindungsgemäß erzeugten Schichten sorgen nicht nur für eine Isolierung oder auch Wärmeleitung, sondern bilden gleichzeitig eine äußere Dekorschicht, so daß keine zusätzlichen Deckschichten erforderlich werden. Da die Grundbestandteile biologischer Art sind, entstehen beim Verbrennen keine besonders giftigen Dämpfe, wie bei Kunststoffmaterialien.

Patentansprüche :

1.    Verfahren zur Herstellung von Ledergrundmasse,
gekennzeichnet durch die Verfahrensschritte:
a) Zerschneiden von Lederabfällen in Streifen oder
   Stücke;
b) Zerreißen oder Zerquetschen der Streifen oder Stücke
   bis zur Auflösung in Feinmaterial und Einzelfasern;
c) Abtrennen der Einzelfasern vom Feinmaterial.

2.    Verfahren nach Anspruch 1,
gekennzeichnet durch Mischen der Fasern mit einem
Plastifizierer und/oder einem Binder und/oder einem
Harz.

3.    Verfahren nach Anspruch 2,
dadurch gekennzeichnet, daß als Binder Zellulosegelatine, Methylzellulose o.ä. verwendet wird.

4.    Verfahren zur Herstellung von Ledergrundmasse,
gekennzeichnet durch die Verfahrensschritte:
a) Zerschneiden von Lederabfällen in Streifen oder
   Stücke;
b) Zerreißen oder Zerquetschen der Streifen oder Stücke
   unter Auflockerung der Faserverbände und Erzeugen von
   Büscheln;
c) wenigstens teilweise Auflösen der Büschel in Einzelfasern mittels eines Lösungsmittels;
d) Abtrennen des Lösungsmittels.

5.    Verfahren nach Anspruch 2,
dadurch gekennzeichnet, daß als Bindemittel die Ledergrundmasse nach Anspruch 4 verwendet wird.

6.    Verfahren nach einem der Ansprüche 1 bis 5,
gekennzeichnet durch Einmischen eines Füllmittels.

7.    Verfahren nach einem der Ansprüche 1 bis 6, gekennzeichnet durch Einmischen eines Schäum- und/oder Blähmittels.

8.    Verfahren nach Anspruch 6, dadurch gekennzeichnet, daß als Füllmittel Metallstaub und/oder Metallspäne verwendet werden.

9.    Verfahren nach einem der Ansprüche 1 bis 8, gekennzeichnet durch Beifügen eines Thixotropiermittels.

10.    Verfahren nach einem der Ansprüche 1 bis 9, gekennzeichnet durch eine Flämmschutzausrüstung.

11.    Verfahren nach einem der Ansprüche 1 bis 10, gekennzeichnet durch Beifügen eines Farbstoffes.

12.    Verfahren nach einem der Ansprüche 1 bis 11, gekennzeichnet durch Beifügen von Weißkalk in Pulverform.

13.    Verwendung der Ledergrundmasse nach einem der Ansprüche 1 bis 11 zur Beschichtung von Oberflächen.

14.    Schichtmaterial, gekennzeichnet durch seinen Aufbau aus einem Ledergrundmaterial nach einem der Ansprüche 1 bis 11.

15.    Schichtmaterial nach Anspruch 13, dadurch gekennzeichnet, daß ein Trägermaterial vorgesehen ist.

16.    Schichtmaterial nach Anspruch 13 oder 14, dadurch gekennzeichnet, daß das Ledergrundmaterial in zwei oder mehreren Schichten angeordnet ist.

17.    Schichtmaterial nach einem der Ansprüche 13 bis 15, dadurch gekennzeichnet, daß die Oberfläche des Schichtmaterials mit Narbungen oder Prägungen versehen ist.

Europäisches
Patentamt

**EUROPÄISCHER RECHERCHENBERICHT**

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| | --- | | C 14 B   13/00 |
| X | FR-A-1 424 003   (DAYNE, PELLERAY & PERRAGUIN) <br><br> * Insgesamt * | 1,2,4, 5,13, 14 | C 14 B    7/00 <br> C 08 L   89/06 |
| | --- | | |
| X | US-A-4 288 498   (SCRIBNER JR.) <br><br> * Insgesamt * | 1,2,6, 10,11, 14,16 | |
| | --- | | |
| X | FR-A-  703 972   (CHOLLET) <br> * Insgesamt * | 1,2,11 ,14 | |
| | --- | | |
| A | DE-C-  824 387   (IMMALIN) <br><br><br> * Insgesamt * | 1-3,11 ,13-15 ,17 | |
| | | | RECHERCHIERTE SACHGEBIETE (Int. Cl. ³) |
| | --- | | |
| A | FR-A-1 302 242   (UNITED SHOE MACHINERY) <br> * Insgesamt * | 1,2,4, 5 | C 14 B <br> D 21 H <br> C 08 L |
| | --- | | |
| A | FR-A-  387 699   (JOOSS) <br><br> * Insgesamt * | 1,2,11 ,13 | |
| | --- | | |
| A | FR-A-  981 482   (THUAU) <br><br> * Insgesamt * | 1,2,11 ,16 | |
| | ---          -/- | | |

Der vorliegende Recherchenbericht wurde für alle Patentansprüche erstellt.

| Recherchenort <br> DEN HAAG | Abschlußdatum der Recherche <br> 29-12-1982 | Prüfer <br> DE RIJCK F. |
|---|---|---|

**Europäisches Patentamt**

## EUROPÄISCHER RECHERCHENBERICHT

### EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-C- 248 592 (HIDE-ITE) | | |

-----

RECHERCHIERTE SACHGEBIETE (Int. Cl. ³)

Der vorliegende Recherchenbericht wurde für alle Patentansprüche erstellt

| Recherchenort | Abschlußdatum der Recherche | Prüfer |
|---|---|---|
| DEN HAAG | 29-12-1982 | DE RIJCK F. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82